# EUROPÄISCHE PATENTSCHRIFT

(11) **EP 4 043 811 B1**
(45) Veröffentlichungstag und Bekanntmachung des Hinweises auf die Patenterteilung: **11.03.2026**
(21) Anmeldenummer: 22156463.6
(22) Anmeldetag: 14.02.2022
(51) Int. Cl.: F24H 9/02, F24H 9/20, F24H 15/12, B01D 53/86

(54) **VERFAHREN UND ANORDNUNG ZUR KATALYTISCHEN UMSETZUNG VON AUS EINEM HEIZGERÄT AUSTRETENDEN WASSERSTOFF**
METHOD AND ARRANGEMENT FOR FOR THE CATALYTIC CONVERSION OF HYDROGEN EMERGING FROM A HEATING DEVICE
PROCÉDÉ ET DISPOSITIF DE RÉACTION CATALYTIQUE DE L'HYDROGÈNE SORTANT D'UN APPAREIL DE CHAUFFAGE

(30) Priorität: 16.02.2021 DE 102021103586
(43) Veröffentlichungstag der Anmeldung: 17.08.2022
(73) Patentinhaber: Vaillant GmbH, 42859 Remscheid (DE)
(72) Erfinder: Oerder, Bodo, 42897 Remscheid (DE); Richter, Klaus, 42855 Remscheid (DE); Reinert, Andreas, 58455 Witten (DE); Demandewicz, Ulrich, 42857 Remscheid (DE); Paul, Michael, 58332 Schwelm (DE); Hopf, Matthias, 42855 Remscheid (DE); Badenhop, Thomas, 42499 Hückeswagen (DE); Grabe, Jochen, 51688 Wipperfürth (DE)

(56) Entgegenhaltungen:
- EP-A1- 2 418 425
- EP-A1- 2 905 540
- DE-A1- 10 150 385
- DE-A1- 102019 116 525

## Beschreibung

Die Erfindung betrifft ein Verfahren und eine Anordnung zur Unschädlichmachung von geringen Mengen Wasserstoff, der in ein Gehäuse, insbesondere in ein ein Heizgerät umgebendes Gehäuse, ausgetreten ist. Wasserstoff als Brenngas oder als Beimischung zu Brenngasen wird immer wichtiger, und es werden große Anstrengen unternommen, neue oder auch existierende Heizgeräte für einen Betrieb damit zu ertüchtigen. Dabei geht es nicht nur um große Anlagen, sondern auch um Wandgeräte zur Erwärmung von Wasser und generell um Heizgeräte für die Beheizung von Gebäuden und/oder die Bereitstellung von warmem Wasser.

Wasserstoff unterscheidet sich bei seiner Verbrennung in mehreren Punkten von bisher verwendeten Brenngasen, insbesondere hat Wasserstoff die Eigenschaft einer hohen Diffusionsneigung. Dies stellt besondere Anforderungen an die Dichtsysteme gasführender Teile in einem Heizgerät. Außerdem lässt sich Wasserstoff sehr leicht entzünden, was die Normung und/oder Gesetzgebung dazu veranlasst, im Vergleich zu beispielsweise Erdgasanwendungen höhere Anforderungen an die Dichtheit zu stellen. Die vorliegende Erfindung ist daher besonders, aber nicht nur geeignet für Heizgeräte, die mit reinem Wasserstoff oder mit Brenngas, das zu mehr als 50%, insbesondere mehr als 97% aus Wasserstoff besteht, betrieben werden.

Die hohe Diffusionsneigung und leichte Entzündbarkeit von Wasserstoff führen bei den potenziellen Anwendern von Heizgeräten zu Vorbehalten gegen einen Betrieb mit Wasserstoff, wenn es um die Sicherheit geht. Es besteht unter anderem die Sorge, dass sich auch bei sehr kleinen Leckagen (die nach geltenden Vorschriften zulässig sind) Wasserstoff irgendwo ansammeln, mit Luft vermischen und irgendwann entzünden könnte, was zu einer Verpuffung mit unerwünschten Folgen führen könnte. Gegenmaßnahmen wie besondere Lüftung von Aufstellräumen, Detektion von ausgetretenem Wasserstoff und/oder besondere Dichtungssysteme sind aufwändig und nicht immer anwendbar. Insbesondere haben moderne Heizgeräte oft ein Gehäuse mit einem zumindest in einem oberen Bereich geschlossenen und nicht belüfteten Innenraum, in dem sich Wasserstoff ansammeln kann.

Die DE 101 50 385 A1 offenbart ein (gattungsfremdes) Brennstoffzellensystem mit einem Gaserzeugungssystem, welches aus flüssigem kohlenstoff- und wasserstoffhaltigen Ausgangsstoffen ein wasserstoffhaltiges Gas erzeugt und in einem Gehäuse angeordnet ist, um das Gaserzeugungssystem gegenüber der Umgebung abzudichten. Das mit Brennstoffzellensystem einer Sicherheitsfunktion zur Vermeidung von unerwünschten, kritischen und zündfähigen Wasserstoff-Sauerstoffgemischen im Gehäuse ausgeführt, wobei der Einsatz von katalytischen Rekombinatoren auf Basis von Platin und/oder Palladium vorgeschlagen wird. Eine solche Sicherheitsfunktion ist aber gerade für häusliche Heizgeräte, insbesondere ohne abgedichtetes Gehäuse nicht ohne Weiteres übertragbar.

Aufgabe der vorliegenden Erfindung ist, die mit Bezug auf den Stand der Technik geschilderten Probleme wenigstens teilweise zu lösen. Insbesondere sollen ein Verfahren und eine Anordnung geschaffen werden, mit denen austretender Wasserstoff gefahrlos unschädlich gemacht werden kann, wobei die Anordnung insbesondere einfach und geeignet für einen Alltagsbetrieb eines Heizgerätes sein soll.

Zur Lösung dieser Aufgabe dienen ein Verfahren und eine Anordnung gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit der Zeichnung, veranschaulicht die Erfindung und gibt weitere Ausführungsbeispiele an.

Zur Lösung der Aufgabe trägt ein Verfahren bei zur katalytischen Umsetzung von Wasserstoff, der aus einem Heizgerät austritt und sich in einem Innenraum eines das Heizgerät umgebenden Gehäuses ansammelt, wobei in einem oberen Bereich des Innenraumes ein katalytisch aktives Material angeordnet wird, welches die Umsetzung von Wasserstoff mit Sauerstoff zu Wasser begünstigt.

Das Heizgerät ist mit Wasserstoff oder einem wasserstoffhaltigen Brenngas betreibbar. Über einen Lufteinlass wird das Heizgerät mit Umgebungsluft versorgt und über einen Brenngaseinlass mit Brenngas (Wasserstoff oder wasserstoffhaltigem Brenngas). Über ein Brenngasventil wird Brenngas der Luft beigemischt, und das entstehende Gemisch mittels eines Gebläses einem Brenner zugeführt. Der Brenner verteilt das Gemisch in einem Verbrennungsraum, wo es verbrannt wird. Entstehende Verbrennungsgase werden einer mit dem Brenner bzw. dem Verbrennungsraum verbundenen Abgasanlage zugeführt und von dort an die Umgebung abgegeben. Das Heizgerät umfasst eine Steuer- und Regeleinheit, die über Steuerleitungen das Brenngasventil und das Gebläse steuert.

Durch das katalytisch aktive Material kann eine chemische Umsetzung zu Wasser ohne Zündquelle und bei geringeren Konzentrationen bzw. bei niedrigeren Temperaturen einsetzen als ohne Katalysator, so dass Ansammlungen von Wasserstoff klein gehalten werden können und/oder vor Ausbildung eines Gefahrenpotentials umgesetzt werden. Das katalytisch aktive Material kann als Beschichtung eines beliebigen Bauteils oder einer Wand im oberen Bereich des Innenraumes angeordnet sein. Wie bei den meisten Katalysatoren ist eine große (strukturierte und/oder zerklüftete) Oberfläche von Vorteil.

Bevorzugt wird in dem oberen Bereich des Innenraums eine erhöhte Sammelstelle für Wasserstoff ausgebildet, in der das katalytisch aktive Material angeordnet wird. Da Wasserstoff aufgrund seiner geringeren Dichte gegenüber Luft im Wesentlichen aufsteigt, sammelt er sich im oberen Bereich des Innenraumes (betrachtet in der montierten Lage des Heizgeräts bzw. Gehäuses) und kann konzentriert werden, indem eine Sammelstelle vorgesehen wird, die (geodätisch) höher liegt als der Rest des Innenraumes. Sie kann z. B. die Form einer Kuppel oder einer Ausbauchung nach oben haben oder aus schrägen Begrenzungen gebildet sein, insbesondere zumindest teilweise begrenzt mit dem Gehäuse.

Erfindungsgemäß ist das katalytisch aktive Material auf einem Träger angeordnet, der bei Unterschreiten einer Umsetzungstemperatur und/oder in zeitlichen Intervallen elektrisch beheizbar ist. Selbst bei sehr effektiven Katalysatoren findet eine Umsetzung oft erst ab einer bestimmten Zündtemperatur (deutlich über Raumtemperatur) statt, weshalb es sinnvoll sein kann, den Träger und damit das katalytisch aktive Material immer oder zu vorgebbaren Zeiten mindestens auf diese Zündtemperatur zu bringen oder dort zu halten. Sobald eine Umsetzung angefangen hat, wird Wärme frei, die zu einer weiteren Temperaturerhöhung im Bereich des katalytisch aktiven Materials führen kann. Da es hier jedoch nur um geringe Mengen an Wasserstoff geht (z. B. 1 ccm bis 10 ccm [Kubikzentimeter] pro Stunde), kann sich die Reaktion nicht unbedingt selbst erhalten, so dass eine Beheizung zumindest in Zeitintervallen sinnvoll ist.

Bevorzugt wird als katalytisch aktives Material Platin und/oder Palladium und/oder Rhodium eingesetzt, die alle gute katalytische Eigenschaften für den beschriebenen Zweck und eine lange Lebensdauer unter den gegebenen Bedingungen haben. Zur Vergrößerung der Oberfläche können poröse keramische Träger mit elektrischer Beheizung eingesetzt werden, es ist aber auch die direkte Beschichtung von Heizdrähten mit solchen Edelmetallen möglich.

Zur Lösung der Aufgabe dient auch eine entsprechende Anordnung zur katalytischen Umsetzung von Wasserstoff, der aus einem Heizgerät austritt und sich in einem Innenraum eines das Heizgerät umgebenden Gehäuses ansammelt, wobei in einem oberen Bereich des Innenraumes ein katalytisch aktives Material angeordnet ist, welches die Umsetzung von Wasserstoff mit Sauerstoff zu Wasser begünstigt.

Bevorzugt weist der obere Bereich des Innenraumes eine Sammelstelle für Wasserstoff auf, in der sich aufsteigender Wasserstoff sammeln kann.

Besonders bevorzugt enthält das katalytisch aktive Material Platin und/oder Palladium und/oder Rhodium.

Alternativ oder additiv kann das katalytisch aktive Material auch mindestens ein Element (oder eine chemische Verbindung mit einem solchen Element) aus der Gruppe der Übergangsmetalle enthalten. Z. B. Mangan-substituiertes Hexaaluminat wird dafür eingesetzt, Brennstoffe bei sehr tiefen Temperaturen (< 0°C) mit Luftsauerstoff katalytisch umzusetzen. Auch z. B. Lanthan-haltige Materialien haben ähnliche Eigenschaften.

In einer bevorzugten Ausführungsform ist das katalytisch aktive Material auf einem Träger aufgebracht, wobei der Träger insbesondere elektrisch beheizbar ist.

Zur Ermöglichung von Wartungsarbeiten und/oder einem Auswechseln ist der Träger mit katalytisch aktivem Material bevorzugt von außerhalb des Gehäuses zugänglich oder auswechselbar.

Die Erläuterungen zum Verfahren können zur näheren Charakterisierung der Anordnung herangezogen werden, und umgekehrt. Die Anordnung kann auch so eingerichtet sein, dass damit das Verfahren durchgeführt wird.

Ein schematisches Ausführungsbeispiel der Erfindung, auf das diese jedoch nicht beschränkt ist, und die Funktionsweise des Verfahrens werden nun anhand der Zeichnung näher erläutert. Es stellt dar:

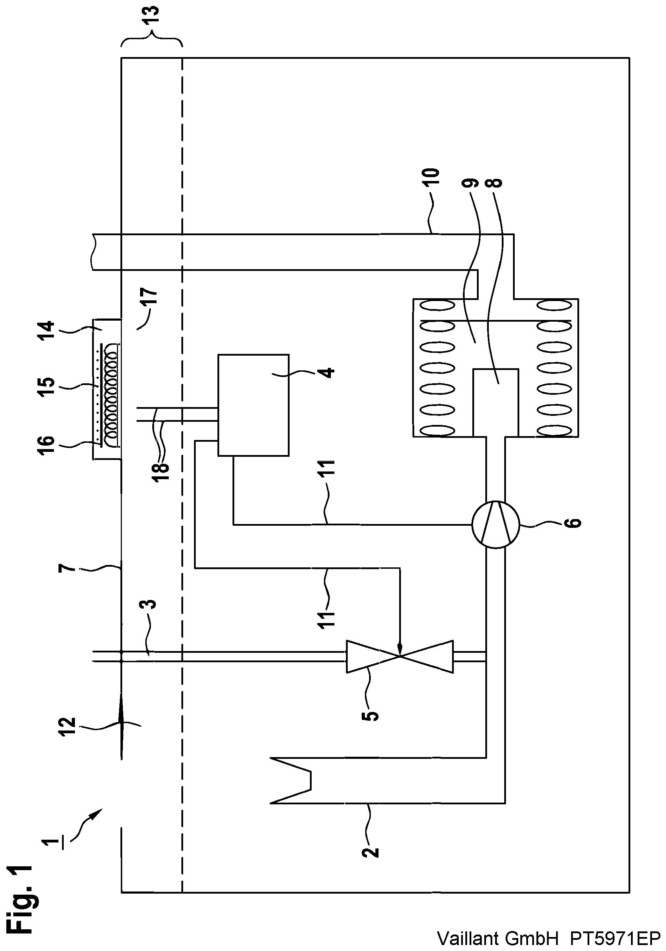

- Fig. 1:: ein Heizgerät mit katalytisch aktivem Material zur Umsetzung von möglicherweise in sein Gehäuse ausgetretenem Wasserstoff.

Fig. 1 zeigt schematisch ein Heizgerät 1, welches mit Wasserstoff oder einem wasserstoffhaltigen Brenngas betreibbar ist. Über einen Lufteinlass 2 wird das Heizgerät 1 mit Umgebungsluft versorgt und über einen Brenngaseinlass 3 mit Brenngas, insbesondere Wasserstoff oder wasserstoffhaltigem Brenngas aus einem Versorgungsnetz. Über ein Brenngasventil 5 wird Brenngas der Luft beigemischt, und das entstehende Gemisch mittels eines Gebläses 6 einem Brenner 8 zugeführt. Der Brenner 8 verteilt das Gemisch in einem Verbrennungsraum 9, wo es verbrannt wird. Entstehende Verbrennungsgase werden einer Abgasanlage 10 zugeführt und von dort an die Umgebung abgegeben. Eine Steuer- und Regeleinheit 4 steuert über Steuerleitungen 11 das Brenngasventil 5, und das Gebläse 6. Das Heizgerät 1 weist ein Gehäuse 7 mit einem Innenraum 12 auf. Falls Wasserstoff irgendwo in dem Heizgerät 1 durch eine kleine Leckage entweicht, so steigt dieser wegen seiner im Verhältnis zu Luft geringeren Dichte im Wesentlichen nach oben und sammelt sich in einem oberen Bereich 13 des Innenraumes. Man kann sogar eine Konzentration des aufgestiegenen Wasserstoffes an einer Sammelstelle 14 erreichen, indem diese Sammelstelle 14 als höchster Bereich des Innenraumes 12 ausgestaltet, beispielsweise wie eine Kuppel oder eine Ausbauchung geformt ist. Erforderlich ist dies für die Wirksamkeit der Erfindung aber nicht. Jedenfalls aber ist im oberen Bereich 13 (oder an der Sammelstelle 14) katalytisch aktives Material 15 vorhanden, welches eine Umsetzung von Wasserstoff mit Sauerstoff zu Wasser begünstigt. Solche Eigenschaften haben z. B. Edelmetalle wie Platin, Palladium und/oder Rhodium. Das Material kann einfach irgendwo im oberen Bereich 13 auf die Innenoberfläche des Gehäuses 7 aufgebracht werden. Da jedoch die Temperaturen dort möglicherweise nicht für das Einsetzen einer katalytischen Reaktion reichen, wird das katalytisch aktive Material 15 vorzugsweise auf einem Träger 16 angeordnet, der eine elektrische Beheizung 17 aufweist, die über elektrische Zuleitungen 18 von der Steuer- und Regeleinheit 4 versorgt wird. Die Beheizung kann dauernd erfolgen, von einer Temperaturmessung im Träger abhängig gemacht und/oder in vorgebbaren Zeitintervallen durchgeführt werden. Immer wenn eine für die katalytische Umsetzung genügende Temperatur erreicht wird, wird möglicherweise vorhandener Wasserstoff an dem katalytisch aktiven Material zu Wasser umbesetzt, wobei Wärme frei wird, die die Reaktion fördert, bis angesammelter Wasserstoff weitestgehend verbrannt ist. Für Wartungsarbeiten und/oder ein Auswechseln des Trägers 16 mit katalytisch aktivem Material 15 ist es sinnvoll, diesen von außen zugänglich und auswechselbar zu gestalten, was durch eine nicht dargestellte Klappe oder eine geeignete Ausbildung des Trägers 16 selbst erreicht werden kann.

Die vorliegende Erfindung erlaubt es, mit einer einfachen und robusten Einrichtung die Sicherheit in einem Heizgerät zu erhöhen, indem größere Ansammlungen von Wasserstoff in einem ein Heizgerät umschließenden Gehäuse mittels katalytischer Umsetzung verhindert werden.

### Bezugszeichenliste

- 1: Heizgerät
- 2: Lufteinlass
- 3: Brenngaseinlass
- 4: Steuer- und Regeleinheit
- 5: Brenngasventil
- 6: Gebläse
- 7: Gehäuse
- 8: Brenner
- 9: Verbrennungsraum
- 10: Abgasanlage
- 11: Steuerleitungen
- 12: Innenraum
- 13: Oberer Bereich (des Innenraumes)
- 14: Sammelstelle
- 15: Katalytisch aktives Material
- 16: Träger
- 17: Elektrische Beheizung
- 18: Elektrische Zuleitungen

## Patentansprüche

1. Verfahren zur katalytischen Umsetzung von Wasserstoff, der aus einem Brenngaseinlass (3), der ein mit Wasserstoff oder einem wasserstoffhaltigen Brenngas betreibbares Heizgerät (1) mit Wasserstoff oder einem wasserstoffhaltigen Brenngas versorgt, austritt, wobei das Heizgerät (1), das ein Gehäuse (7) mit einem Innenraum (12) aufweist, über einen Lufteinlass (2) mit Umgebungsluft versorgt wird, der über ein Brenngasventil (5) Brenngas beigemischt wird, und das entstehende Gemisch mittels eines Gebläses (6) einem Brenner (8) zugeführt wird, der das Gemisch in einem Verbrennungsraum (9) verteilt und verbrennt und entstehende Verbrennungsgase einer mit dem Brenner (8) verbundenen Abgasanlage (10) zugeführt werden, und das Heizgerät (1) eine Steuer- und Regeleinheit (4) umfasst, die über Steuerleitungen (11) das Brenngasventil (5) und das Gebläse (6) steuert und sich der aus dem Brenngaseinlass (3) austretende Wasserstoff sich in dem Innenraum (12) des das Heizgerät (1) umgebenden Gehäuses (7) ansammelt, wobei in einem oberen Bereich (13) des Innenraumes (12) ein katalytisch aktives Material (15) angeordnet wird, welches die Umsetzung von Wasserstoff mit Sauerstoff zu Wasser begünstigt, und wobei das katalytisch aktive Material (15) auf einem Träger (16) angeordnet ist, der bei Unterschreiten einer Umsetzungstemperatur zur Umsetzung von Wasserstoff mit Sauerstoff zu Wasser und/oder in zeitlichen Intervallen elektrisch beheizt wird.

2. Verfahren nach Anspruch 1, wobei in dem oberen Bereich (13) eine erhöhte Sammelstelle (14) für Wasserstoff ausgebildet wird, in der das katalytisch aktive Material (15) angeordnet wird.

3. Verfahren nach Anspruch 1 oder 2, wobei das katalytisch aktive Material (15) immer oder zu vorgebbaren Zeiten auf einer bestimmten Zündtemperatur des katalytisch aktiven Materials (15) gehalten wird.

4. Verfahren nach einem der Ansprüche 1 bis 3, wobei geringe Mengen an Wasserstoff im Bereich von 1 ccm bis 10 ccm pro Stunde umgesetzt werden.

5. Verfahren nach einem der vorhergehenden Ansprüche, wobei als katalytisch aktives Material (15) zumindest ein Element aus der folgenden Gruppe eingesetzt wird: Platin, Palladium, Rhodium.

6. Anordnung, umfassend ein Heizgerät (1), das einen Brenngaseinlass (3) und ein Gehäuse (7) mit einem Innenraum (12) aufweist, und das über einen Lufteinlass (2) mit Umgebungsluft versorgt wird, der über ein Brenngasventil (5) Brenngas beigemischt wird, und das entstehende Gemisch mittels eines Gebläses (6) einem Brenner (8) zugeführt wird, der das Gemisch in einem Verbrennungsraum (9) verteilt und verbrennt und entstehende Verbrennungsgase einer mit dem Brenner (8) verbundenen Abgasanlage (10) zugeführt werden, und das Heizgerät (1) eine Steuer- und Regeleinheit (4) umfasst, die über Steuerleitungen (11) das Brenngasventil (5) und das Gebläse (6) steuert, wobei die Anordnung zur katalytischen Umsetzung von Wasserstoff, der aus dem Heizgerät (1) austritt und sich in dem Innenraum (12) des das Heizgerät (1) umgebenden Gehäuses (7) ansammelt, in einem oberen Bereich (13) des Innenraumes (12) ein katalytisch aktives Material (15) umfasst, welches die Umsetzung von Wasserstoff mit Sauerstoff zu Wasser begünstigt, und wobei das katalytisch aktive Material (15) auf einem Träger (16) aufgebracht ist, der eine elektrische Beheizung (17) aufweist.

7. Anordnung nach Anspruch 6, wobei der obere Bereich (13) des Innenraumes (12) eine Sammelstelle (14) für Wasserstoff aufweist, in der sich aufsteigender Wasserstoff sammeln kann.

8. Anordnung nach Anspruch 6 oder 7, wobei das katalytisch aktive Material (15) zumindest ein Element aus der folgenden Gruppe umfasst: Platin, Palladium, Rhodium.

9. Anordnung nach einem der Ansprüche 6 bis 8, wobei das katalytisch aktive Material (15) zumindest ein Element aus der Gruppe der Übergangsmetalle umfasst.

10. Anordnung nach einem der Ansprüche 6 bis 9, wobei der Träger (16) mit porösem keramischem Material ausgeführt ist.

11. Anordnung nach einem der Ansprüche 6 bis 10, wobei der Träger (16) mit katalytisch aktivem Material (15) von außerhalb des Gehäuses (12) auswechselbar ist.

## Claims

1. Method for the catalytic conversion of hydrogen escaping, wherein the heating appliance (1), has a housing (7) with an interior space (12) and from a fuel gas inlet (3) which a with hydrogen or a hydrogen-containing fuel gas supplies heating appliance (1) operablewith hydrogen or a hydrogen-containing fuel gasis supplied with ambient air via an air inlet (2), which is mixed with fuel gas via a fuel gas valve (5), and the resulting mixture by means of a blower (6) is fed to a burner (8), which distributes the mixture in a combustion chamber (9) and combusts it, and the resulting combustion gases an connected to the burner (8)are fed toexhaust system (10), and the heating appliance (1) a control and regulation unit (4) compriseswhich controls the fuel gas valve (5) and the blower (6) via control lines (11) and the hydrogen escaping from the fuel gas inlet (3) in the interior ,accumulates12) of the housing (7) surrounding the heating appliance (1), wherein a catalytically active material (15) is arranged in an (upper region (13) of the interior ( ) (12), which promotes the conversion of hydrogen with oxygen to water, and wherein the catalytically active material (15) is arranged on a carrier (16) which is electrically heated when the conversion temperature for converting hydrogen with oxygen to water is not reached and/or at time intervals.

2. Method according to claim 1, wherein a raised collection point (14) for hydrogen is formed in the upper region (13), in which the catalytically active material (15) is arranged.

3. Method according to claim 1 or 2, wherein the catalytically active material (15) is always or at predeterminable times maintained at a specific ignition temperature of the catalytically active material (15).

4. Method according to one of claims 1 to 3, wherein small amounts of hydrogen in the range of 1 cm³ to 10 cm³ per hour are converted.

5. Method according to one of the preceding claims, wherein at least one element from the following group is used as the catalytically active material (15): platinum, palladium, rhodium.

6. Arrangement comprising a heating appliance (1) which a fuel gas inlet (3) and has a housing (7) with an interior space (12) and which with via an air inlet (2) is supplied ambient air which is connected to a fuel gas valve (5), and the resulting mixture is fed by means of a blower (6) to a burner (8), which distributes the mixture in a combustion chamber (9) and combusts it, and resulting thecombustion gases are fed to an exhaust system (10) connected to the burner (8), and the heating appliance (1) comprises a control and regulation unit (4) which via control lines controls the fuel gas valve (5) and the blower (6) 11, wherein the arrangement() for the catalytic conversion of hydrogen which escapes from the heating appliance (1) and accumulates in the interior (12) of the housing (13) surrounding the heating appliance (1) (7), comprises , a catalytically active material (15) in an upper region (13) of the interior (12)which promotes the conversion of hydrogen with oxygen to water, and wherein the catalytically active material (15) is applied to a carrier (16) which has an electric heating element (17).

7. Arrangement according to claim 6, wherein the upper region (13) of the interior (12) has a collection point (14) for hydrogen, in which rising hydrogen can collect.

8. Arrangement according to claim 6 or 7, wherein the catalytically active material (15) comprises at least one element from the following group: platinum, palladium, rhodium.

9. Arrangement according to one of claims 6 to 8, wherein the catalytically active material (15) comprises at least one element from the group of transition metals.

10. Arrangement according to one of claims 6 to 9, wherein the carrier (16) is made of porous ceramic material.

11. Arrangement according to one of claims 6 to 10, wherein the carrier (16) with catalytically active material (15) is replaceable from outside the housing (12).

## Revendications

1. Procédé de conversion catalytique d'hydrogène qui sort d'une entrée de gaz combustible (3) qui alimente en hydrogène ou en un gaz combustible contenant de l'hydrogène un appareil de chauffage (1) pouvant fonctionner avec de l'hydrogène ou un gaz combustible contenant de l'hydrogène, dans lequel l'appareil de chauffage (1), qui présente un boîtier (7) avec un espace intérieur (12), est alimenté par le biais d'une entrée d'air (2) en air ambiant, auquel est mélangé du gaz combustible par le biais d'une soupape de gaz combustible (5), et le mélange produit est fourni au moyen d'une soufflante (6) à un brûleur (8) qui répartit et brûle le mélange dans une chambre de combustion (9) et des gaz de combustion produits sont fournis à une installation d'échappement (10) reliée au brûleur (8), et l'appareil de chauffage (1) comprend une unité de commande et de régulation (4) qui commande par le biais de conduites de commande (11) la soupape de gaz combustible (5) et la soufflante (6), et l'hydrogène sortant de l'entrée de gaz combustible (3) s'accumule dans l'espace intérieur (12) du boîtier (7) entourant l'appareil de chauffage (1), dans lequel un matériau actif catalytiquement est agencé dans une zone supérieure (13) de l'espace intérieur (12), matériau qui favorise la conversion de l'hydrogène avec l'oxygène en eau, et dans lequel le matériau actif catalytiquement (15) est agencé sur un support (16) qui est chauffé électriquement en cas de non-atteinte d'une température de conversion de l'hydrogène avec l'oxygène en eau et/ou à intervalles temporels.

2. Procédé selon la revendication 1, dans lequel un point de collecte (14) élevé pour l'hydrogène est formé dans la zone supérieure (13), dans laquelle le matériau actif catalytiquement (15) est agencé.

3. Procédé selon la revendication 1 ou 2, dans lequel le matériau actif catalytiquement (15) est maintenu toujours ou à des moments pouvant être prédéfinis à une température d'allumage déterminée du matériau actif catalytiquement (15).

4. Procédé selon l'une quelconque des revendications 1 à 3, dans lequel de faibles quantités d'hydrogène sont converties dans la plage de 1 ccm à 10 ccm par heure.

5. Procédé selon l'une quelconque des revendications précédentes, dans lequel comme matériau actif catalytiquement (15), au moins un élément du groupe suivant est utilisé : platine, palladium, rhodium.

6. Ensemble comprenant un appareil de chauffage (1) qui présente une entrée de gaz combustible (3) et un boîtier (7) avec un espace intérieur (12) et qui est alimenté par le biais d'une entrée d'air (2) en air ambiant, auquel est mélangé du gaz combustible par le biais d'une soupape de gaz combustible (5) et le mélange produit est fourni au moyen d'une soufflante (6) à un brûleur (8) qui répartit et brûle le mélange dans une chambre de combustion (9) et des gaz de combustion produits sont fournis à une installation d'échappement (10) reliée au brûleur (8), et l'appareil de chauffage (1) comprend une unité de commande et de régulation (4) qui commande par le biais de conduites de commande (11) la soupape de gaz combustible (5) et la soufflante (6), dans lequel l'ensemble de conversion catalytique d'hydrogène qui sort de l'appareil de chauffage (1) et s'accumule dans l'espace intérieur (12) du boîtier (7) entourant l'appareil de chauffage (1), comprend dans une zone supérieure (13) de l'espace intérieur (12) un matériau actif catalytiquement (15) qui favorise la conversion de l'hydrogène avec l'oxygène en eau, et dans lequel le matériau actif catalytiquement (15) est appliqué sur un support (16) qui présente un chauffage (17) électrique.

7. Ensemble selon la revendication 6, dans lequel la zone supérieure (13) de l'espace intérieur (12) présente un point de collecte (14) pour l'hydrogène, dans lequel de l'hydrogène montant peut s'accumuler.

8. Ensemble selon la revendication 6 ou 7, dans lequel le matériau actif catalytiquement (15) comprend au moins un élément du groupe suivant : platine, palladium, rhodium.

9. Ensemble selon l'une quelconque des revendications 6 à 8, dans lequel le matériau actif catalytiquement (15) comprend au moins un élément du groupe des métaux de transition.

10. Ensemble selon l'une quelconque des revendications 6 à 9, dans lequel le support (16) est formé avec du matériau céramique poreux.

11. Ensemble selon l'une quelconque des revendications 6 à 10, dans lequel le support (16) est interchangeable avec du matériau actif catalytiquement (15) de l'extérieur du boîtier (12).
